# EUROPÄISCHE PATENTSCHRIFT

(11) **EP 3 013 184 B1**
(45) Veröffentlichungstag und Bekanntmachung des Hinweises auf die Patenterteilung: **26.02.2020**
(21) Anmeldenummer: 14741517.8
(22) Anmeldetag: 23.06.2014
(51) Int. Cl.: A46B 3/18, A46D 3/00, A61C 15/00

(54) **VERFAHREN ZUR HERSTELLUNG EINES INTERDENTALREINIGERS**
METHOD FOR THE PRODUCTION OF AN INTERDENTAL CLEANER
PROCÉDÉ PERMETTANT LA RÉALISATION D'UN DISPOSITIF DE NETTOYAGE INTERDENTAIRE

(30) Priorität: 28.06.2013 DE 102013010782
(43) Veröffentlichungstag der Anmeldung: 04.05.2016
(60) Teilanmeldung: 16001880.0
(73) Patentinhaber: Interbros GmbH, 79677 Schönau (DE)
(72) Erfinder: BUTZ, Jürgen, 79677 Schönau (DE); PÖTSCH, Gerhard, 79108 Freiburg (DE)
(74) Vertreter: Lichti - Patentanwälte Partnerschaft mbB
(86) Internationale Anmeldenummer: PCT/EP2014/001698
(87) Internationale Veröffentlichungsnummer: WO 2014/206547

(56) Entgegenhaltungen:
- EP-A1- 1 679 017
- WO-A1-2014/023395

## Beschreibung

Die Erfindung betrifft ein Verfahren zur Herstellung eines Interdentalreinigers mit den Merkmalen des Oberbegriffs des Anspruchs 1.

Neben den aus Holz oder Metalldraht bestehenden Interdentalreinigern früherer Zeiten sind heutzutage aus Kunststoff bestehende Interdentalreiniger bekannt, wie sie in der EP 0 932 371 A1 gezeigt und beschrieben sind. Ein derartiger Interdentalreiniger besitzt einen stabförmigen Träger aus einem ersten, relativ harten und formstabilen Kunststoff, der im vorderen Bereich seiner axialen Länge mit einem aus einem zweiten, weichen Kunststoff, beispielsweise einem thermoplastischen Elastomer bestehenden Überzug versehen ist. Der Überzug kann auf seiner radial äußeren Seite eine Strukturierung in Form von Noppen oder sich radial nach außen erstreckenden Fingern aufweisen, um die Reinigungswirkung zu erhöhen. Der Benutzer kann den Interdentalreiniger an einem Griffabschnitt des stabförmigen Trägers ergreifen und den stabförmigen Träger mit dem die Strukturierung tragenden Überzug in einen Zahnzwischenraum einführen und dort hin und her bewegen, wodurch der Zahnzwischenraum gereinigt und eventuell anhaftende Partikel gelöst werden.

Es hat sich gezeigt, dass es für die mit dem Interdentalreiniger zu erzielende Reinigungswirkung vorteilhaft ist, wenn die Verformbarkeit des Interdentalreinigers einerseits groß genug ist, um auch schwer zu erreichende Abschnitte des Zahnzwischenraums zu reinigen, andererseits muss der Interdentalreiniger ausreichend biegesteif sein, um insbesondere in kleine Zahnzwischenräume gut eindringen zu können. Da jeder Benutzer andere diesbezügliche Anforderungen an einen Interdentalreiniger stellt, wäre es an sich wünschenswert, Interdentalreiniger unterschiedlicher Verformbarkeit und Biegesteifigkeit auf den Markt zu bringen. Dazu ist es jedoch notwendig, unterschiedliche Spritzgusswerkzeuge vorzuhalten und/oder unterschiedliche Kunststoffmaterialien zu verwenden und/oder unterschiedliche Geometrien des Interdentalreinigers herzustellen. Auf jeden Fall sind damit erhebliche zusätzliche Kosten verbunden.

Aus der EP 1 679 017 A1, von der im Oberbegriff des Anspruchs 1 ausgegangen wird, ist ein Verfahren zur Herstellung eines Interdentalreinigers bekannt, wobei ein stabförmiger Träger aus Kunststoff auf zumindest einem Abschnitt seiner axialen Länge mit einer Strukturierung mit radial vom Träger hervorstehenden Strukturelementen versehen wird. Die Strukturelemente werden gebildet, indem eine angeformte Lamelle nachträglich zerteilt wird. Der so hergestellte Interdentalreiniger wird in einem weiteren Verfahrensschritt verdreht bzw. tordiert, so dass die Strukturelemente in Längsrichtung des Interdentalreinigers schraubenförmig angeordnet sind.

Es ist relativ schwierig, einen tordierten Interdentalreiniger in zuverlässig reproduzierbarer Weise herzustellen. Es hat sich gezeigt, dass bei einer Tordierung des stabförmigen Trägers des Interdentalreinigers bereits kleine Imperfektionen des Materials des Interdentalreinigers ausreichen, um zu einer ungleichmäßigen Tordierung oder sogar einem Beulen oder Verbiegen des stabförmigen Trägers zu kommen. Ein derartig verformter Interdentalreiniger ist jedoch nicht sinnvoll anwendbar und muss entsorgt werden. An den Einspannstellen, an denen der stabförmige Träger mittels der Haltevorrichtungen erfasst und währen der Tordierung gehalten wird, werden hohe Kräfte und Momente in den stabförmigen Träger eingeleitet, die zu ungleichmäßigen Verformungen führen können.

Der Erfindung liegt die Aufgabe zugrunde, ein Verfahren zu schaffen, mit dem sich ein entsprechender Interdentalreiniger mit einem reproduzierbaren Verformungsbild in zuverlässiger Weise herstellen lässt.

Diese Aufgabe wird durch ein Verfahren mit den Merkmalen des Anspruchs 1 gelöst.

Bei dem Verfahren ist ebenfalls vorgesehen, dass der Träger zumindest in einem Teil des die Strukturierung aufweisenden Abschnittes zusammen mit der Strukturierung um seine Längsachse tordiert wird. Zu diesem Zweck ist vorgesehen, dass der Träger in zwei axial beabstandeten Bereichen mittels Haltevorrichtungen, beispielsweise Klemmbacken, erfasst und vorzugsweise fest eingespannt wird und dass anschließend die Haltevorrichtungen relativ zueinander verdreht werden, wodurch der Träger um seine Längsachse tordiert wird. Anschließend werden die Haltevorrichtungen geöffnet, wodurch der Träger aus der Klemmhalterung freikommt und um ein gewisses Maß zurückfedern kann, jedoch tordiert bleibt.

Dabei wird der gegenseitige Abstand der Haltevorrichtungen während des Tordierens verändert und insbesondere vergrößert. Dabei kann die Veränderung bzw. Vergrößerung des Abstandes zwischen den Haltevorrichtungen während des Tordierens entweder schrittweise bzw. stufenweise oder vorzugsweise kontinuierlich erfolgen. Auf diese Weise ist vermieden, dass die Haltekräfte und die Torsionskräfte immer an der gleichen Stelle des Trägers bzw. des Überzuges eingeleitet werden.

In bevorzugter Ausgestaltung der Erfindung ist vorgesehen, dass eine der Haltevorrichtungen ortsfest ist, während die andere Haltevorrichtung während der Tordierung axial in Richtung der Spitze des Interdentalreinigers verschoben wird, wobei die Halte- und Klemmkräfte so gewählt sind, dass durch die Verschiebung der Haltevorrichtung vorzugsweise keine Streckung des Trägers gegeben ist, d.h. keine übermäßigen axialen Zugkräfte in den Träger eingeleitet werden.

In Weiterbildung der Erfindung kann vorgesehen sein, dass der Träger vor und/oder während der Tordierung erwärmt wird. Auf diese Weise ist es möglich, die Steifigkeit des Kunststoff-Materials des Trägers und eines eventuellen Überzuges herabzusetzen und somit die Rückfeder-Eigenschaften des Materials zu verändern und in gewünschter Weise anzupassen.

Das Tordieren des Trägers führt zu einer bleibenden Verdrehung der Strukturierung um die Längsachse des Interdentalreinigers. In bevorzugter Ausgestaltung der Erfindung ist vorgesehen, dass die bleibende Verdrehung der Strukturierung über einen Winkel von ≥ 30°, insbesondere im Bereich von 60° bis 360° und insbesondere im Bereich von 60° bis 120° verläuft. Besonders bevorzugt ist eine bleibende Verdrehung der Strukturierung um 90° ± 20°.

Vorzugsweise wird der Träger vor dem Tordieren im Bereich der Strukturierung mit einem hülsenförmigen Überzug versehen, der die Strukturelemente der Strukturierung entweder zumindest teilweise einbettet und/oder auf seiner Außenseite trägt. Dabei kann vorgesehen sein, dass die Strukturierung radial hervorstehende Finger und/oder Lippen aufweist, die einstückig an den Überzug angeformt sind. Alternativ oder zusätzlich dazu kann vorgesehen sein, dass die Strukturierung radial hervorstehende Borsten aufweist, die in dem Träger und/oder in dem Überzug eingebettet sind.

Alternativ ist es möglich, einen stabförmigen Federstahl vorab zu tordieren und in dieser tordierten Stellung zu fixieren. Anschließend wird der Federstahl mit dem den Träger bildenden Kunststoff und gegebenenfalls auch mit dem den Überzug bildenden Kunststoff umgeben und insbesondere umspritzt. Danach wird die Fixierung des tordierten Federstahls aufgehoben, so dass dieser zurückfedert und im Idealfall wieder seine ursprüngliche Konfiguration einnimmt. Bei diesem Zurückfedern werden der Träger und die darauf befindliche Strukturierung tordiert.

Die Anordnung der Borsten an bzw. in dem Interdentalreiniger kann in einer möglichen Ausgestaltung der Erfindung dadurch erfolgen, dass die Borsten nebeneinander in einer Ebene liegend zusammen mit dem Träger in einem Spritzgusswerkzeug positioniert werden. Der Träger kann entweder bereits vorgefertigt sein oder in einem unmittelbar vorhergehenden Verfahrensschritt in dem Spritzwerkzeug ausgebildet worden sein. In dem Spritzgusswerkzeug werden die Borsten und der Träger unter Bildung des Überzugs vorzugsweise mit einem weichen Kunststoff, beispielsweise einem thermoplastischen Elastomer überspritzt, so dass die Borsten in dem Überzug sicher gehalten sind und radial aus diesem hervorstehen. Anschließend können die vorstehenden Enden der Borsten auf eine gewünschte Länge zugeschnitten werden, woraufhin der Träger mit dem Überzug und den Borsten und ggf. den einstückig auf der Außenseite des Überzugs angeformten Fingern und/oder Lippen in genannter Weise um die Längsachse des Trägers tordiert wird.

In einer alternativen Ausgestaltung des Verfahrens kann vorgesehen sein, dass die Borsten in einer Ebene liegend in einem Spritzgusswerkzeug eingelegt und dann mit dem den Träger bildenden Kunststoff umspritzt und in diesen eingebettet werden. Vorzugsweise wird der die Borsten haltenden Träger anschließend mit dem dem Überzug bildenden Kunststoff teilweise umspritzt, wobei die Borsten aus dem Überzug radial hervorstehen. Anschließend werden die Borsten auf ein gewünschtes Maß zugeschnitten, woraufhin die Tordierung in genannter Weise durchgeführt wird. Dabei können die Borsten im noch geschlossenen Werkzeug oder beim Öffnen des Werkzeugs oder bei geöffnetem Werkzeug oder auch außerhalb des Werkzeugs in einer separaten Schneidestation geschnitten werden.

In den Träger kann vorher eine Versteifungseinlage eingearbeitet sein, bei der es sich beispielsweise um einen sich axial in Längsrichtung des Trägers verlaufenden Draht, insbesondere Metalldraht oder Kunststoffdraht handeln kann. Wenn der Draht auch im Bereich der Strukturierung innerhalb des Trägers angeordnet ist, wird er zusammen mit dem Träger in diesem Bereich tordiert.

Der Draht kann einlagig oder doppellagig ausgebildet sein. Wenn der Draht in Doppellage angeordnet wird, ist es möglich, zwischen den Lagen die Borsten anzuordnen und insbesondere einzuklemmen und dadurch sicher vorzupositionieren, bevor der Draht und die Borsten mit dem Kunststoffmaterial des Trägers umspritzt werden.

Aufgrund der Tordierung erhält der stabförmige Träger eine Verdichtung und Verformung in seiner Längsrichtung, wodurch sich die räumliche Stabilität des Trägers und somit auch seine Verformungseigenschaften verändern. Es ist somit möglich, die Verformungseigenschaften des Interdentalreinigers durch das Maß der Tordierung zu beeinflussen und einzustellen, ohne dass ein Materialwechsel oder eine veränderte Geometrie des Spritzgusswerkzeuges notwendig sind.

Die Tordierung des stabförmigen Trägers zusammen mit der Strukturierung bringt den weiteren Vorteil mit sich, dass die Strukturierung aufgrund der Tordierung über den Umfang verteilt wird. Auf diese Weise können auch Strukturelemente, die zunächst nur in einer linearen, sich in Längsrichtung des Interdentalreinigers erstreckenden Reihe angeordnet sind, nachträglich über den Umfang des Interdentalreinigers verteilt werden, wodurch sie besser zur Reinigungswirkung beitragen.

Dabei kann vorgesehen sein, dass die Strukturierung radial hervorstehende Finger und/oder Lippen aufweist. Die Finger und/oder Lippen können an einem beispielsweise hülsenförmigen Überzug des Trägers angeformt sein. Vorzugsweise besteht der Träger aus einem ersten, relativ harten Kunststoffmaterial und ist in einem Teil seiner axialen Länge mit dem beispielsweise hülsenförmigen Überzug aus einem relativ weichen zweiten Kunststoffmaterial, beispielsweise einem thermoplastischen oder duroplastischen Elastomer, Silikon oder einem anderen weichen Kunststoff umgeben, wobei der Überzug außenseitig einstückig mit den radial nach außen hervorstehenden Fingern und/oder Lippen ausgebildet ist.

Zusätzlich oder alternativ dazu kann vorgesehen sein, dass die Strukturierung radial hervorstehende Borsten aufweist, die vorzugsweise in zumindest einer Reihe angeordnet sind. Dabei können die Borsten zunächst in einer oder zwei auf entgegengesetzten Seiten des stabförmigen Trägers angeordneten, in Längsrichtung des Trägers verlaufenden gradlinigen Reihen angeordnet sein und dann durch die Tordierung so verformt werden, dass die zumindest eine Reihe oder Reihen wendelartig um den Träger herum verlaufen.

Die Borsten sind vorzugsweise in den aus Kunststoff bestehenden Träger und/oder in den Überzug eingebettet und dadurch sicher gehalten.

Borsten im Sinne dieser Erfindung sind dünne vorgefertigte Abschnitte eines aus Kunststoff bestehenden Monofilamentes oder Multifilamentes, wobei die Borsten einen maximalen Durchmesser von 0,25mm aufweisen und als Einzelborsten und/oder als Borstenbündel verwendet werden können.

Der in diesem Text verwendete Begriff "axial" bezieht sich auf die Längsachse des stabförmigen Trägers und ggf. auch auf die Längsachse eines Überzuges. Der Begriff "radial" bezieht sich dementsprechend auf eine senkrecht zur axialen Längsrichtung verlaufende Richtung.

Die Finger und/oder Lippen und/oder die Borsten können sich entweder radial, d.h. im rechten Winkel zur Längsachse des Interdentalreinigers, oder auch schräg zu dieser, d.h. mit radialer Komponente erstrecken, was durch den Ausdruck "radial" mit umfasst sein soll.

Das Tordieren des Trägers führt zu einer Verdrehung der Strukturierung um die Längsachse des Interdentalreinigers.

Nachdem die den Träger tordierende Torsionskraft nicht mehr wirksam ist, federt der Träger üblicherweise aufgrund seiner elastischen Eigenschaften um ein geringes Maß entgegen der Torsionsrichtung zurück, wobei er eine bleibende Torsionsverformung oder Tordierung beibehält. Vorzugsweise ist vorgesehen, dass die bleibende Torsionsverformung zu einer Verdrehung der Strukturierung über einen Winkel von ≥ 30°, insbesondere im Bereich von 60° bis 360°, insbesondere im Bereich von 60° bis 120° und besonders bevorzugt 90° ± 20° führt.

Es kann auch eine Verdrehung von 10 bis 50 Umdrehungen pro Meter, vorzugsweise eine Verdrehung von 10 bis 40 Umdrehungen pro Meter und insbesondere eine Verdrehung von ca. 15 bis 20 Umdrehungen pro Meter vorgesehen sein.

Eine weitere Anpassung der Verformungseigenschaften des stabförmigen Trägers und somit des Interdentalreinigers kann dadurch erreicht werden, dass in dem Träger zumindest abschnittsweise eine Versteifungseinlage angeordnet ist, die vorzugsweise eine höhere Biegesteifigkeit als der Träger hat, so dass der Interdentalreiniger in seiner Gesamtheit steifer ist.

Dabei kann vorgesehen sein, dass die Versteifungseinlage von zumindest einem sich axial in Längsrichtung des Trägers erstreckenden Draht, insbesondere einem Metalldraht oder einem Kunststoffdraht gebildet ist. In Weiterbildung kann vorgesehen sein, dass zwei parallel verlaufende Drähte angeordnet und an ihrem vorderen Ende unter Bildung eines U-förmigen Übergangsbereichs miteinander verbunden sind. Zwischen den Drähten können Borsten angeordnet und gehalten sein.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine perspektivische Darstellung eines erfindungsgemäß hergestellten Interdentalreinigers,
- Fig. 2: eine perspektivische Darstellung eines geöffneten Spritzgusswerkzeugs,
- Fig. 3: das Spritzgusswerkzeug gemäß Fig. 2 nach Einlegen des Trägers und der Borsten,
- Fig. 4: das Spritzgusswerkzeug gemäß Fig. 3 nach dem Schließen des Werkzeugs,
- Fig. 5: einen im Spritzgusswerkzeug hergestellten Interdentalreiniger beim Beschneiden der Borsten,
- Fig. 6: den Interdentalreiniger gemäß Fig. 5 nach Beschneiden der Borsten,
- Fig. 7: den Interdentalreiniger gemäß Fig. 6 unmittelbar vor dem Schließen der Haltevorrichtungen,
- Fig. 8: den Interdentalreiniger gemäß Fig. 7 nach dem Schließen der Haltevorrichtungen,
- Fig. 9: den Interdentalreiniger gemäß Fig. 8 während des Tordierens,
- Fig. 10: den Interdentalreiniger mit einer alternativen Ausgestaltung der Strukturierung,
- Fig. 11: den Interdentalreiniger mit einer weiteren alternativen Ausgestaltung der Strukturierung,
- Fig. 12: eine perspektivische Darstellung eines geöffneten Spritzgusswerkzeugs mit eingelegten Borsten,
- Fig. 13: einen in dem Spritzgusswerkzeug gemäß Fig. 12 hergestellten stabförmigen Träger mit eingebetteten Borsten,
- Fig. 14: eine perspektivische Darstellung eines geöffneten Spritzgusswerkzeugs mit eingelegtem, vorgefertigtem Träger,
- Fig. 15: einen im Spritzgusswerkzeug gemäß Fig. 14 hergestellten Interdentalreiniger beim Beschneiden der Borsten,
- Fig. 16: den Interdentalreiniger gemäß Figur 15 nach Beschneiden der Borsten,
- Fig. 17: eine alternative Ausgestaltung des vorderen, tordierten Endes des Interdentalreinigers,
- Fig. 18: die erste Phase einer Weiterentwicklung des Verfahrens zum Tordieren des Interdentalreinigers,
- Fig. 19: eine zweite Phase des weiterentwickelten Verfahrens,
- Fig. 20: eine dritte Phase des weiterentwickelten Verfahrens,
- Fig. 21: eine vierte Phase des weiterentwickelten Verfahrens,
- Fig. 22: eine fünfte Phase des weiterentwickelten Verfahrens, und
- Fig. 23: eine sechste Phase des weiterentwickelten Verfahrens.

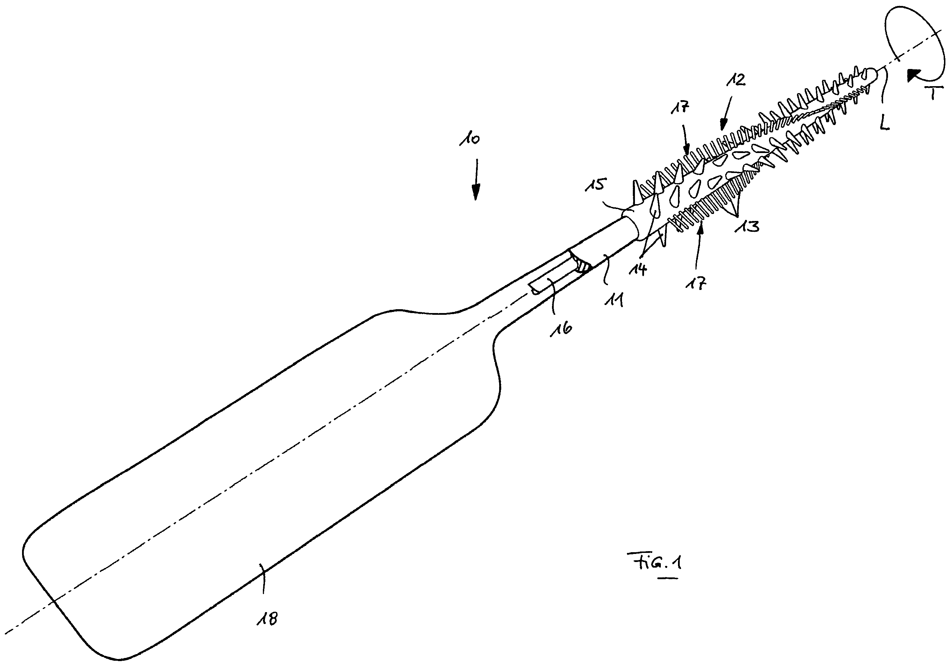

Figur 1 zeigt eine perspektivische Darstellung einen erfindungsgemäßen Interdentalreinigers 10, der einen stabförmigen Träger 11 aufweist. Der Träger 11 besitzt eine axiale Längsachse L und besteht vorzugsweise aus einem harten bzw. formstabilen ersten Kunststoffmaterial.

Der Träger 11 besitzt in seinem gemäß Figur 1 rechten Endbereich eine Strukturierung 12 und am gegenüberliegenden, gemäß Figur 1 rechten Ende ein Griffteil 18, an dem ein Benutzer den Interdentalreiniger 10 erfassen kann.

Die Strukturierung 12 ist von einem hülsenartigen Überzug 15 aus einem weichen zweiten Kunststoffmaterial, insbesondere einem thermoplastischen Elastomer gebildet, wobei der Überzug 15 auf seiner Außenseite radial nach außen hervorstehende, einstückig angeformte Finger 14 trägt. Des Weiteren sind in den Überzug 15 Borsten 13 eingebettet, die radial nach außen hervorstehen und in zwei Reihen 17 sich in Längsrichtung des Trägers 11 erstrecken und wendelartig um den Träger 11 herum verlaufen. Die beiden Borstenreihen 17 sind jeweils diametral entgegengesetzt am Überzug 15 angeordnet, wobei sie im dargestellten Ausführungsbeispiel in Längsrichtung des Überzugs 15 um eine halbe Drehung, d.h. ca. 180° gewendelt sind.

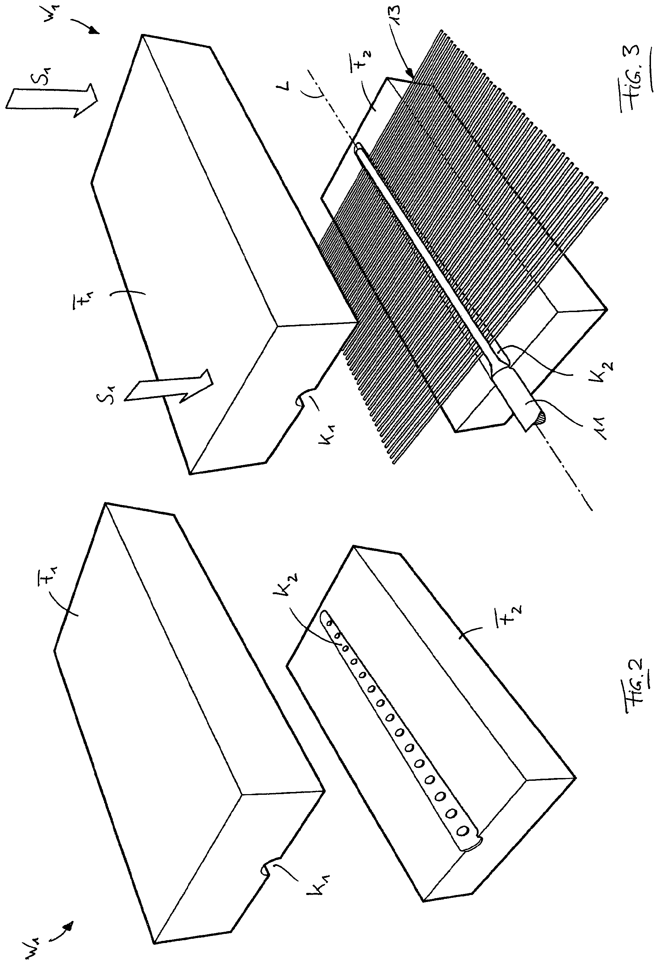

Im Folgenden wird anhand der Figuren 2 bis 9 ein erstes Verfahren zur Herstellung des erfindungsgemäßen Interdentalreinigers erläutert.

Figur 2 zeigt eine schematische Darstellung eines geöffneten Spritzgusswerkzeuges W mit einer oberen Formhälfte F₁, die eine obere Kavität K₁ besitzt, und einer unteren Formhälfte F₂, die eine untere Kavität K₂ aufweist.

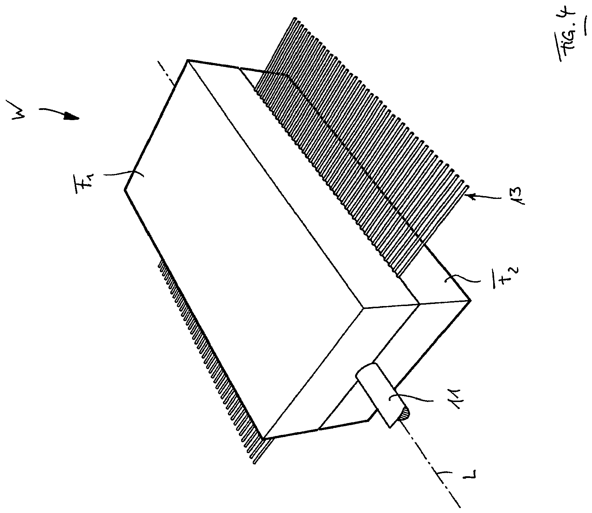

Gemäß Figur 3 wird in die Kavität K₂ der unteren Formhälfte F₂ ein Abschnitt des vorgefertigten stabförmigen Trägers 11 zusammen mit einer Anordnung von Borsten 13 eingelegt, wobei die Borsten 13 im Wesentlichen senkrecht zur Längsrichtung L des Trägers 11 verlaufen und auf zwei entgegengesetzten Seiten über die Kavität K₂ hervorstehen. Anschließend wird das Spritzgusswerkzeug W₁ geschlossen, indem die obere Formhälfte F₁ auf die untere Formhälfte F₂ abgesenkt wird, wie es durch die Pfeile S₁ in Figur 3 angedeutet ist. Nach dem Schließen des Spritzgusswerkzeugs W₁, wie es in Figur 4 dargestellt ist, wird in den von den Kavitäten K₁ und K₂ gebildeten Formhohlraum ein flüssiger Kunststoff, insbesondere ein thermoplastisches Elastomer eingespritzt, so dass der in dem Spritzgusswerkzeug W₁ liegende Abschnitt des Trägers 11 mit dem hülsenförmigen Überzug 15 versehen wird, der zu dem vorderen Ende des Interdentalreinigers leicht konisch zuläuft und auf seiner Außenseite die radial nach außen hervorstehenden Finger 14 trägt. Darüber hinaus wird durch den eingespritzten, den Überzug 15 bildenden Kunststoff erreicht, dass die Borsten 13 in den Überzug 15 eingebettet und in diesem fixiert werden.

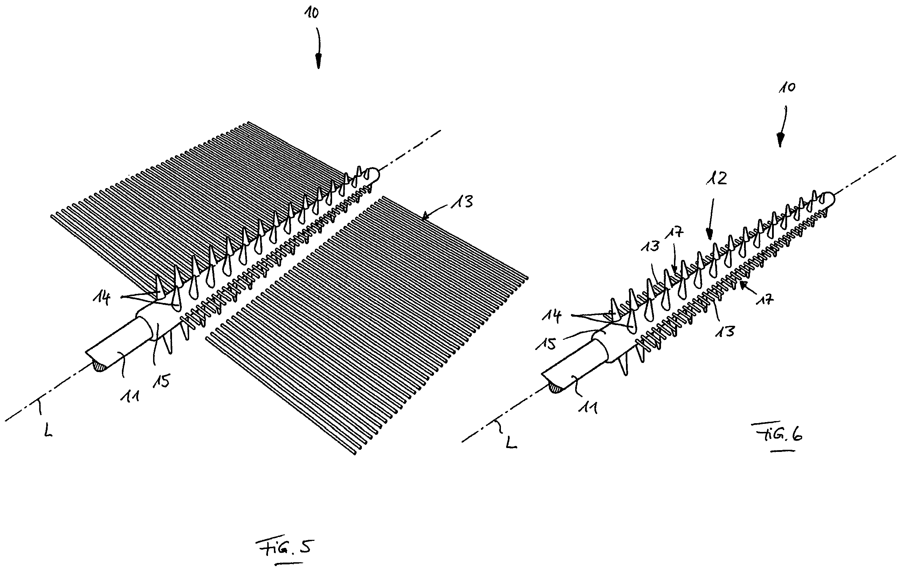

Nach dem Öffnen des Spritzgusswerkzeuges W₁ werden die radial hervorstehenden Borsten 13 auf eine gewünschte Länge geschnitten, wie es in Figur 5 dargestellt ist. Auf diese Weise ist der in Figur 6 dargestellte Interdentalreiniger 10 gebildet. Dieser weist den auf dem vorderen Ende des stabförmigen Trägers 11 sitzenden, konischen Überzug 15 mit radial hervorstehenden, angeformten Fingern 14 und den zu entgegengesetzten Seiten radial hervorstehenden Borsten 13 auf, wobei die Borsten 13 in zwei linearen, jeweils in Längsrichtung des stabförmigen Trägers 11 verlaufenden Reihen 17 ausgerichtet sind.

Alternativ können die Borsten auch im noch geschlossenen Werkzeug oder beim Öffnen des Werkzeugs oder bei geöffnetem Werkzeug oder auch außerhalb des Werkzeugs in einer separaten Schneidestation geschnitten werden.

In einem darauffolgenden Verfahrensschritt wird der Interdentalreiniger in axial beabstandeten Abschnitten in eine erste Haltevorrichtung 20 bzw. eine zweite Haltevorrichtung 21 eingespannt. Die erste Haltevorrichtung 20 weist einen unteren Klemmbacken 20.1 und einen oberen Klemmbacken 20.2 auf, die den Interdentalreiniger am hinteren, dem Griffteil 18 zugewandten Ende des Überzugs 15 einspannen können.

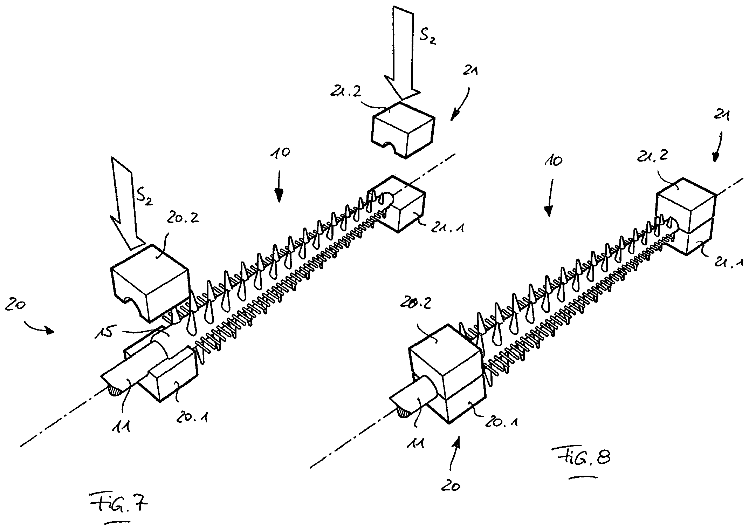

Die zweite Haltevorrichtung 21 weist einen unteren Klemmbacken 21.1 und einen oberen Klemmbacken 21.2 auf und kann den Interdentalreiniger am vorderen, dem Griffteil 18 abgewandten Ende des Überzugs 15 einspannen. Wie Figur 7 zeigt, wird der Interdentalreiniger in die unteren Klemmbacken 20.1 und 21.1. eingelegt, woraufhin die oberen Klemmbacken 20.2 und 21.2 so verfahren werden (siehe Pfeile S₂), dass der Interdentalreiniger zwischen der ersten Haltevorrichtung 20 und der zweiten Haltevorrichtung 21 eingespannt ist, wie es in Figur 8 gezeigt ist.

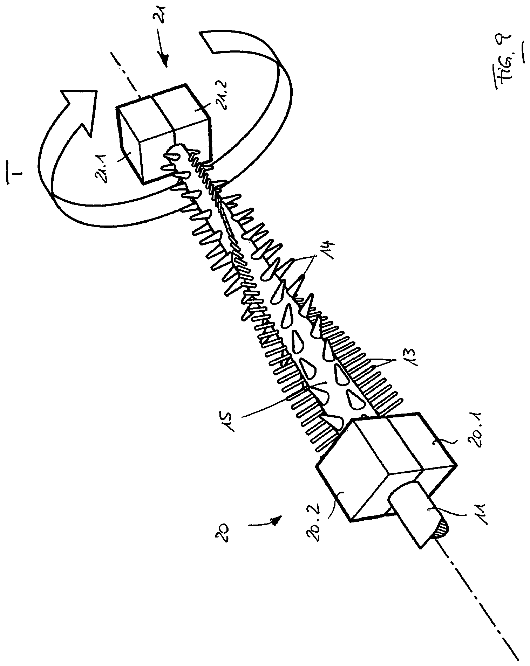

In einem nächsten Verfahrensschritt wird die vordere zweite Haltevorrichtung 21 um die Längsachse L des Interdentalreinigers 10 bzw. stabförmigen Trägers 11 gedreht, wie es in Figur 9 durch den Pfeil T angedeutet ist. Dies führt dazu, dass der zwischen den beiden Haltevorrichtungen 20 und 21 befindliche Bereich des Interdentalreinigers 10, d.h. der dortige Abschnitt des Trägers 11, der Überzug 13 mit den Fingern 14 und die Borsten 13 um die Längsachse L des Trägers 11 tordiert werden, so dass sie eine plastische Verformung erfahren. Nach dem Öffnen und Entfernen der beiden Haltevorrichtung 20 und 21 besitzt der Interdentalreiniger 10 die in Figur 1 dargestellte Form, wobei der Träger 11 und der Überzug 15 mit der Strukturierung 12 so tordiert sind, dass die Finger 14 und insbesondere die Reihen 17 der Borsten 13 wendelartig um den Träger 11 herum verlaufen.

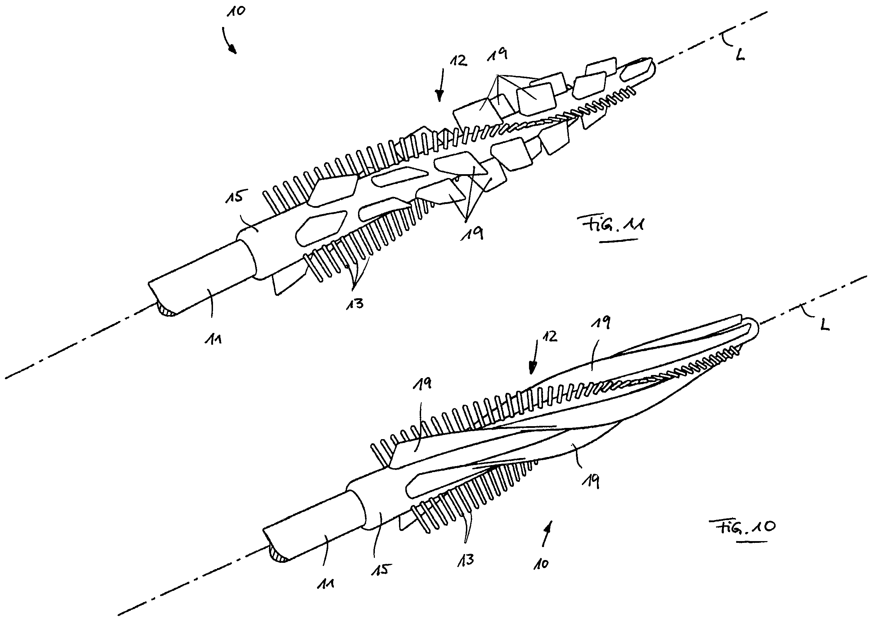

Figur 10 zeigt eine perspektivische Ansicht des vorderen Abschnitts des erfindungsgemäßen Interdentalreinigers 10, wobei die Strukturierung 12 neben den Borsten 13 hier mehrere in Längsrichtung des Interdentalreinigers 10 verlaufende Lippen 19 aufweist, die aufgrund der Tordierung des Trägers 11 und des Überzugs 15 wendelartig um den Interdentalreiniger umlaufen. Die Lippen 19 sind einstückig an den Überzug 15 angeformt und sind über den Umfang des Interdentalreinigers 10 verteilt.

Während bei der Ausgestaltung gemäß Figur 10 vier Lippen 19 angeordnet sind, die sich jeweils annähernd über die gesamte Länge des Überzugs 15 erstrecken, sind bei dem Ausführungsbeispiel gemäß Figur 11 eine Vielzahl von wesentlich kürzeren Lippen 19 vorgesehen. Die Lippen 19 sind in mehreren Längsreihen angeordnet und umlaufen den Interdentalreiniger 10 aufgrund der Tordierung wendelartig.

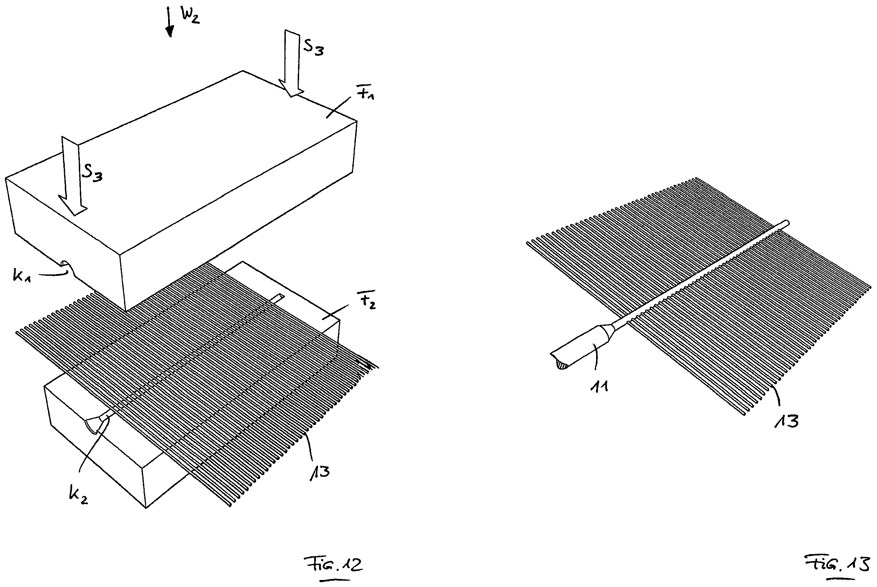

In den Figuren 12 bis 16 ist ein alternatives Herstellungsverfahren für den erfindungsgemäßen Interdentalreiniger 10 dargestellt. Figur 12 zeigt in schematischer Darstellung ein geöffnetes Spritzgusswerkzeug W₂ mit einer oberen Formhälfte F₁, die eine obere Kavität K₁ besitzt, und einer unteren Formhälfte F₂, die eine untere Kavität K₂ aufweist. Zwischen die Formhälften F₁, F₂ wird eine Anordnung von parallel ausgerichteten Borsten 13 eingelegt, wobei die Borsten 13 senkrecht zur Längsrichtung der Kavitäten K₁ und K₂, die der Form des auszubildenden stabförmigen Trägers entsprechen, verlaufen. Nach dem Einlegen der Borsten 13 wird das Spritzgusswerkzeug W₂ geschlossen, wie es durch die Pfeile S₃ in Figur 12 angedeutet ist. Nach dem Schließen des Spritzgusswerkzeugs W₂ wird in den von den Kavitäten K₁ und K₂ gebildeten Formhohlraum ein flüssiger Kunststoff eingespritzt, der den Träger 11 bildet, wobei die Borsten 13 in den Träger 11 eingebettet und in diesem fixiert sind, wie es in Figur 13 dargestellt ist.

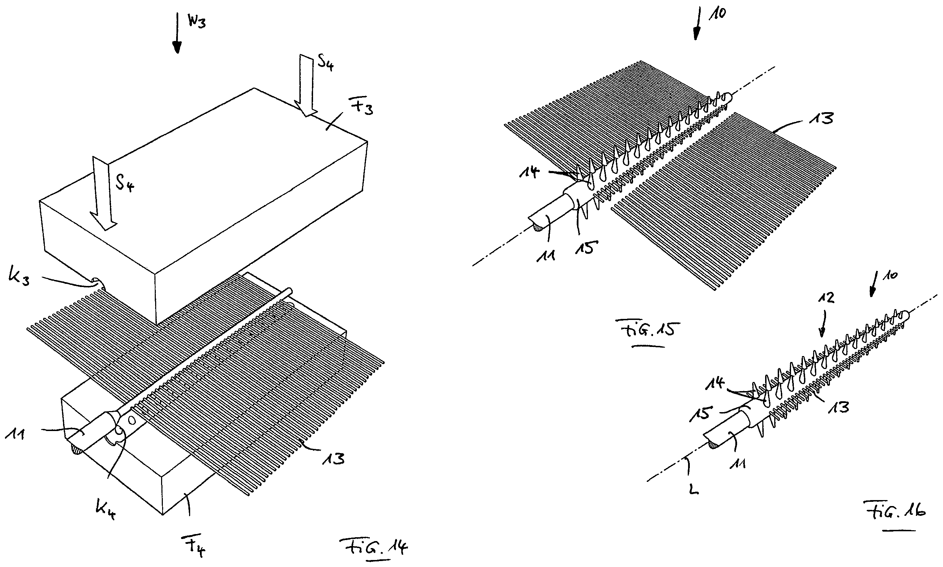

Nach dem Öffnen des Spritzgusswerkzeugs wird der Träger 11 mit den eingebetteten Borsten 13 in ein weiteres, in Figur 14 dargestelltes Spritzgusswerkzeug W₂ eingelegt, dessen Formhälften F₃ und F₄ jeweils eine Kavität K₃ bzw. K₄ zur Ausbildung des Überzugs 15 aufweisen. Der mit den Borsten 13 versehene Träger 11 wird zwischen die Formhälften F₃ und F₄ eingelegt, woraufhin das Spritzgusswerkzeug geschlossen wird, wie es durch die Pfeile S₄ in Figur 14 angedeutet ist. Anschließend wird in die Kavitäten ein Kunststoff eingespritzt, so dass der in dem Spritzgusswerkzeug liegende Abschnitt des Trägers 11 mit dem hülsenförmigen Überzug 15 versehen wird. Auf der Außenseite des Überzugs 15 sind die bereits erwähnten radial nach außen hervorstehenden Finger 14 angeformt. Die Borsten 13, die in den Träger 11 eingebettet sind, sind somit auch in den Überzug 15 eingebettet und in diesem zusätzlich gehalten. Nach dem Öffnen des Spritzgusswerkzeugs werden die radial hervorstehenden Borsten 13 auf eine gewünschte Länge geschnitten, wie es in Figur 15 gezeigt ist. Dadurch ergibt sich der in Figur 16 dargestellte Interdentalreiniger, der in einem nachfolgenden Verfahrensschritt tordiert wird, wie es bereits anhand der Figuren 7 bis 9 erläutert ist.

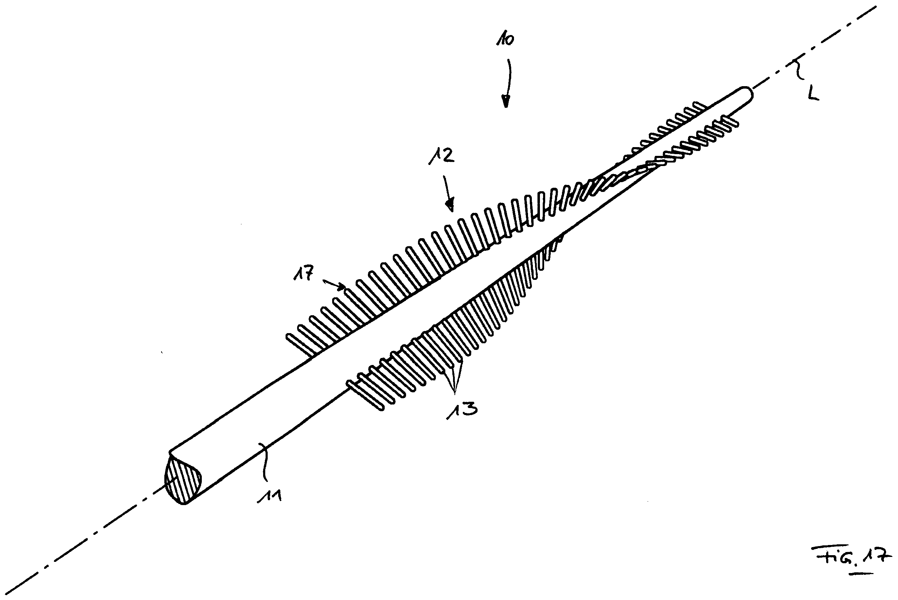

Figur 17 zeigt eine alternative, vereinfachte Ausgestaltung eines erfindungsgemäßen Interdentalreinigers 10, von dem nur das vordere Ende dargestellt ist, da der Interdentalreiniger ansonsten dem bereits in Figur 1 dargestellten Interdentalreiniger entspricht. Der Interdentalreiniger 10 besitzt einen stabförmigen Träger 11 aus einem formstabilen ersten Kunststoffmaterial, in den eine Strukturierung 12 eingebettet ist. Die Strukturierung 12 ist von Borsten 13 gebildet, die in den Träger 11 eingebettet sind und diesen in radialer Richtung durchdringen, so dass die Borsten 13 radial vom Träger 11 hervorstehen und in zwei Reihen 17 sich in Längsrichtung des Trägers 11 erstrecken und wendelartig um den Träger 11 herum verlaufen. Die beiden Borstenreihen 17 sind jeweils diametral entgegengesetzt am Träger 11 angeordnet, wobei sie im dargestellten Ausführungsbeispiel in Längsrichtung des Trägers 11 um ca. 180° gewendelt sind.

Der in Figur 17 dargestellte Interdentalreiniger 11 kann beispielsweise dadurch hergestellt werden, dass in bereits beschriebener Weise eine Borstenanordnung in ein Spritzgusswerkzeug eingelegt und mit dem Kunststoff-Material des Trägers 11 umspritzt wird. Anschließend wird der Träger zusammen mit der Strukturierung 12 um seine Längsachse tordiert, wie es anhand der Figuren 7 bis 9 erläutert wurde.

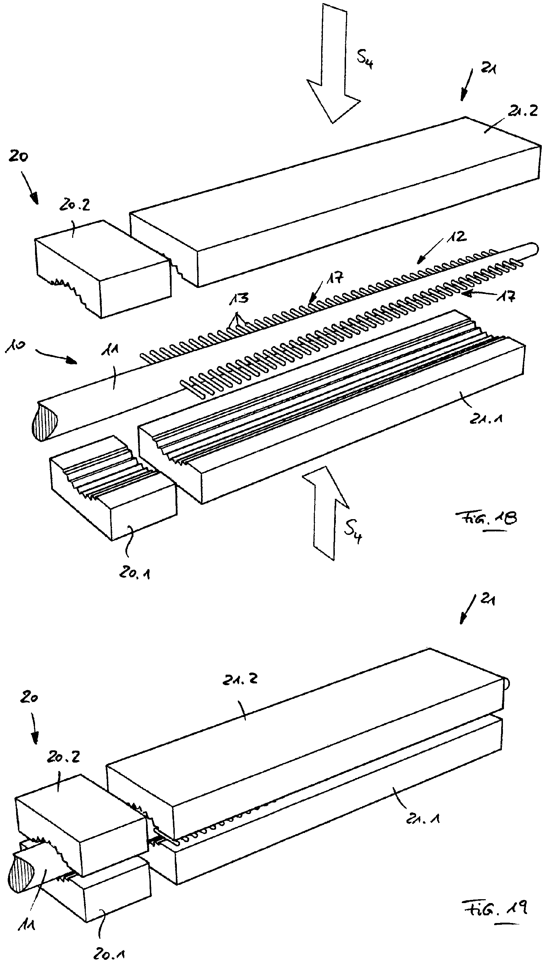

Im Folgenden soll anhand der Figuren 18 bis 23 eine weiterentwickelte Vorgehensweise zur Tordierung des Trägers 11 und der Strukturierung 12 beschrieben werden. Es sei darauf hingewiesen, dass diese weiterentwickelte Vorgehensweise auch bei allen Interdentalreinigern angewendet werden kann, die in den bisherigen Ausführungsbeispielen beschrieben wurden, d.h. die zusätzlich einen hülsenartigen Überzug 15 und ggf. auch radial von diesem hervorstehende, angeformte Finger 14 und/oder Lippen 9 besitzen.

Vor der Tordierung besitzt der Interdentalreiniger 10 eine linear ausgerichtete Konfiguration, wie sie in Figur 18 dargestellt ist. Der sich axial erstreckende Träger 11 ist von radial verlaufenden Borsten 13 durchdrungen, die auf beiden Seiten des Trägers 11 hervorstehen und auf diese Weise zwei axial verlaufende, gradlinige Borstenreihen 17 bilden.

Eine erste Haltevorrichtung 20 weist in genannter Weise einen unteren Klemmbacken 20.1 und einen oberen Klemmbacken 20.2 auf, die den Interdentalreiniger 10 am hinteren, dem nicht dargestellten Griffteil zugewandten Ende der Strukturierung mit Abstand von dieser einspannen können.

Eine zweite Haltevorrichtung 21 weist einen unteren Klemmbacken 21.1 und einen oberen Klemmbacken 21.2 auf. Die Klemmbacken sind so dimensioniert, dass sie den Träger 11 über annähernd die gesamte Länge der Strukturierung zwischen sich einspannen können.

Der vorgefertigte, noch nicht tordierte Interdentalreiniger 10 wird gemäß Figur 18 zwischen die jeweils unteren Klemmbacken 20.1, 21.1 und die oberen Klemmbacken 20.2 und 21.2 gelegt, woraufhin die Klemmbacken so verfahren und geschlossen werden (s. Pfeile S₄), dass der Interdentalreiniger 10 zwischen der ersten Haltevorrichtung 20 und der zweiten Haltevorrichtung 21 eingespannt ist, wie es in Figur 19 dargestellt ist. Die erste Haltevorrichtung 20 hält den Träger abseits der Strukturierung 12 eingespannt, während die zweite Haltevorrichtung 21 im dargestellten Ausführungsbeispiel den Träger 11 im gesamten Bereich der Strukturierung 12 einspannt.

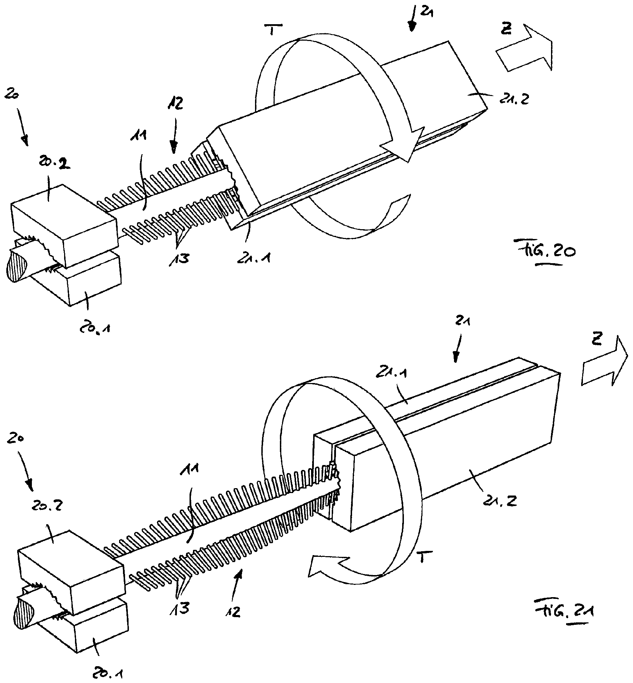

In einem nächsten Verfahrensschritt wird die zweite Haltevorrichtung 21 um die Längsachse L des Interdentalreinigers 10 bzw. stabförmigen Trägers 11 gedreht, wie es in Figur 20 durch den Pfeil T angedeutet ist. Gleichzeitig wird die zweite Haltevorrichtung in Axialrichtung des Trägers 11 verschoben (s. Pfeil Z), so dass der Abstand zwischen den beiden Haltevorrichtungen 20, 21 vergrößert wird. Infolge der Verdrehung der zweiten Haltevorrichtung 21 relativ zu der ersten Haltevorrichtung 20 wird der zwischen den beiden Haltevorrichtungen 20 und 21 befindliche Bereich des Interdentalreinigers 20, d.h. der dortige Abschnitt des Trägers 11 mit den in diesem Bereich angeordneten Borsten 13 um die Längsachse des Trägers tordiert, so dass sie eine Verformung erfahren. Aufgrund der axialen Verschiebung der zweiten Haltevorrichtung 21 relativ zu der ersten Haltevorrichtung 20 ändert sich in stetiger Weise die Länge des zwischen den Haltevorrichtungen angeordneten Bereichs des Trägers, der tordiert wird. Auf diese Weise kann vermieden werden, dass die Haltekräfte und die Torsionskräfte infolge der zweiten Haltevorrichtung 21 immer an der gleichen axialen Stelle des Trägers eingeleitet werden.

Die Halte- bzw. Klemmkraft der zweiten Haltevorrichtung 21 und die von der zweiten Haltevorrichtung 21 auf den Träger 11 infolge seiner axialen Verschiebung ausgeübte Zugkraft sind so dimensioniert, dass es dadurch nicht zu einer irreversiblen plastischen Streckung des Trägers 11 kommt.

Figur 20 zeigt einen Zustand, bei dem die zweite Haltevorrichtung 21 relativ zu der ersten Haltevorrichtung 20 um ca. 45° verdreht und relativ zu dieser um eine erste Strecke axial verschoben ist. Figur 21 zeigt einen Zustand, bei dem eine weitere axiale Verschiebung der zweiten Haltevorrichtung 21 relativ zu der ortsfesten ersten Haltevorrichtung 20 stattgefunden hat, so dass sich der Abstand zwischen den Haltevorrichtungen vergrößert hat, und bei der die zweite Haltevorrichtung 21 um ca. 90° relativ zu der ersten Haltevorrichtung verdreht ist.

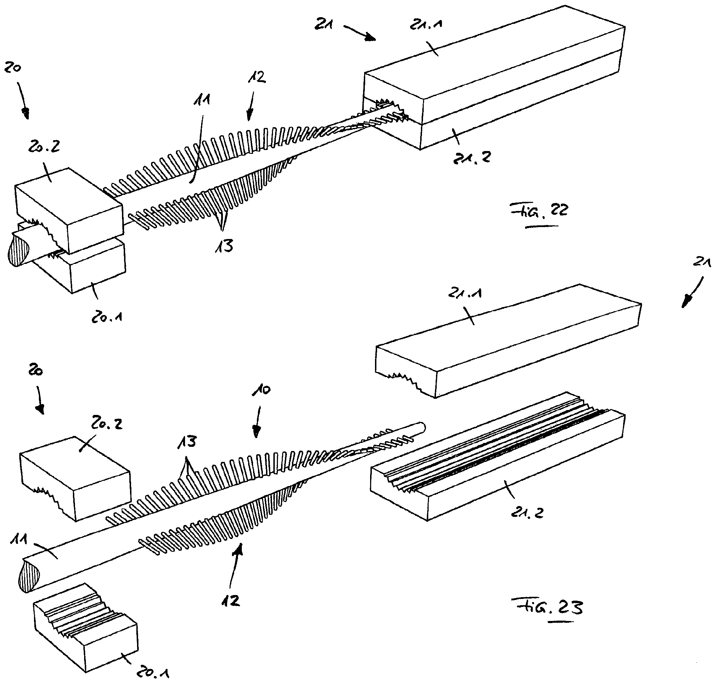

Die Verdrehung und die axiale Verschiebung der zweiten Haltevorrichtung 21 relativ zu der ersten Haltevorrichtung 20 wird fortgeführt, bis die in Figur 22 dargestellte Endposition erreicht ist, in der der Abstand zwischen den beiden Haltevorrichtungen 20 und 21 so groß ist, dass die gesamte Strukturierung 12 zwischen den Haltevorrichtungen 20 und 21 frei liegt, wobei die zweite Haltevorrichtung 21 relativ zur ersten Haltevorrichtung um 180° gedreht ist. Anschließend werden die Haltevorrichtungen geöffnet (s. Figur 23), wodurch der Interdentalreiniger 10 von den Haltevorrichtungen 20 und 21 freikommt und die in Figur 17 dargestellte tordierte Form besitzt.

Es sei darauf hingewiesen, dass der Interdentalreiniger nach Öffnen der Haltevorrichtungen üblicherweise infolge innerer Spannungen um ein geringes Maß entgegen der Tordierrichtung zurückfedert, was im vorliegenden Ausführungsbeispiel nicht dargestellt ist. Diesen Rückstell-Effekt kann man berücksichtigen, indem man den Interdentalreiniger über das an sich gewünschte Maß, beispielsweise 180° hinaus tordiert, so dass nach der Rückfederung des Interdentalreinigers genau das gewünschte Maß der Tordierung erreicht ist.

## Patentansprüche

1. Verfahren zur Herstellung eines Interdentalreinigers (10), wobei ein stabförmiger Träger (11) aus Kunststoff auf zumindest einem Abschnitt einer axialen Länge mit einer Strukturierung (12) mit radial vom Träger (11) hervorstehenden Strukturelementen versehen wird, und wobei der Träger (11) zumindest in einem Teil des die Strukturierung (12) aufweisenden Abschnittes zusammen mit der Strukturierung (12) um seine Längsachse (L) tordiert wird, wobei der Träger (11) in zwei axial beabstandeten Bereichen mittels Haltevorrichtungen (20, 21) erfasst und die Haltevorrichtungen (20, 21) dann relativ zueinander verdreht werden, **dadurch gekennzeichnet dass** der gegenseitige Abstand der Haltevorrichtungen (20, 21) während des Tordierens des Trägers (11) verändert wird.

2. Verfahren nach Anspruch 1, **dadurch gekennzeichnet, dass** der gegenseitige Abstand der Haltevorrichtungen (20, 21) während des Tordierens des Trägers (11) kontinuierlich verändert wird.

3. Verfahren nach einem der Ansprüche 1 oder 2, **dadurch gekennzeichnet, dass** der Träger (11) vor und/oder während der Tordierung erwärmt wird.

4. Verfahren nach einem der Ansprüche 1 bis 3, **dadurch gekennzeichnet, dass** eine bleibende Torsionsverformung des Trägers (11) zu einer Verdrehung der Strukturierung (12) über einen Winkel von ≥ 30°, insbesondere im Bereich von 60° bis 360°, insbesondere im Bereich von 60° bis 120° und bevorzugt von 90° ± 20° führt.

5. Verfahren nach einem der Ansprüche 1 bis 4, **dadurch gekennzeichnet, dass** der Träger (11) im Bereich der Strukturierung (12) mit einem hülsenförmigen Überzug (17) versehen wird.

6. Verfahren nach Anspruch 5, **dadurch gekennzeichnet, dass** die Strukturierung (12) radial hervorstehende Finger (14) und/oder Lippen (19) aufweist, die an den Überzug (15) angeformt sind.

7. Verfahren nach einem der Ansprüche 1 bis 6, **dadurch gekennzeichnet, dass** die Strukturierung radial hervorstehende Borsten (13) aufweist, die in den Träger (11) und/oder in den Überzug (15) eingebettet werden.

8. Verfahren nach Anspruch 7, **dadurch gekennzeichnet, dass** die Borsten (13) in einer Ebene liegend zusammen mit dem Träger (11) in einem Spritzgusswerkzeug positioniert, in diesem unter Bildung des Überzugs (15) umspritzt und anschließend auf eine gewünschte Länge zugeschnitten werden.

9. Verfahren nach Anspruch 8, **dadurch gekennzeichnet, dass** die Borsten (13) in einer Ebene liegend in einem Spritzgusswerkzeug unter Bildung des Trägers (11) umspritzt werden und dass in einem nachfolgenden Verfahrensschritt auf eine gewünschte Länge zugeschnitten werden.

10. Verfahren nach einem der Ansprüche 1 bis 9, **dadurch gekennzeichnet, dass** der Träger (11) zusammen mit dem Überzug (15) und den Borsten (13) und/oder den Fingern (14) und/oder den Lippen (19) tordiert wird.

## Claims

1. Method for manufacturing an interdental cleaner (10), wherein a rod-shaped carrier (11) consisting of plastic is provided on at least one section of an axial length with a structuring (12) with structural elements protruding radially from the carrier (11) and wherein the carrier (11) is twisted together with the structuring (12) about its longitudinal axis (L) in at least one part of the section having the structuring (12), wherein the carrier (11) is grasped by means of holding devices (20, 21) in two areas located at axially spaced locations from one another, and the holding devices (20, 21) are then twisted relative to one another, **characterized in that** the mutual distance between the holding devices (20, 21) is changed during the twisting of the carrier (11).

2. Method in accordance with claim 1, **characterized in that** the mutual distance between the holding devices (20, 21) is changed continuously during the twisting of the carrier (11).

3. Method in accordance with one of the claims 1 or 2, **characterized in that** the carrier (11) is heated before and/or during the twisting.

4. Method in accordance with one of the claims 1 through 3, **characterized in that** a permanent torsional deformation of the carrier (11) leads to a twisting of the structuring (12) over an angle of ≥ 30°, especially in the range of 60° to 360°, especially in the range of 60° to 120° and preferably 90° ± 20°.

5. Method in accordance with one of the claims 1 through 4, **characterized in that** the carrier (11) is provided with a sleeve-like coating (17) in the area of the structuring (12).

6. Method in accordance with claim 5, **characterized in that** the structuring (12) has radially protruding fingers (14) and/or lips (19), which are made integrally in one piece with the coating (15).

7. Method in accordance with one of the claims 1 through 6, **characterized in that** the structuring has radially protruding bristles (13), which are embedded in the carrier (11) and/or in the coating (15).

8. Method in accordance with claim 7, **characterized in that** the bristles (13) are positioned, located in one plane together with the carrier (11), in an injection mold, extrusion-coated in this while the coating (15) is formed, and are subsequently cut to a desired length.

9. Method in accordance with claim 8, **characterized in that** the bristles (13), located in one plane, are extrusion-coated in an injection mold while the carrier (11) is formed, and that they are cut to a desired length in a subsequent method step.

10. Method in accordance with one of the claims 1 through 9, **characterized in that** the carrier (11) is twisted together with the coating (15) and with the bristles (13) and/or with the fingers (14) and/or the lips (19).

## Revendications

1. Procédé permettant la réalisation d'un dispositif de nettoyage interdentaire (10), un support en forme de tige (11) en matière plastique étant pourvu, sur au moins une section d'une longueur axiale, d'une structuration (12) avec des éléments structurés saillant hors du support (11) dans le plan radial et le support (11) étant torsadé, au moins dans une partie de la section comportant la structuration (12), conjointement avec la structuration (12), autour de son axe longitudinal (L), le support (11) étant empoigné dans deux zones placées à une certaine distance l'une de l'autre dans le plan axial à l'aide de dispositifs de maintien (20, 21) et les dispositifs de maintien (20, 21) étant ensuite torsadés l'un par rapport à l'autre, **caractérisé en ce que** la distance mutuelle entre les dispositifs de maintien (20, 21) varie pendant le torsadage du support (11).

2. Procédé selon la revendication 1, **caractérisé en ce que** la distance mutuelle entre les dispositifs de maintien (20, 21) est modifiée en continu pendant le torsadage du support (11).

3. Procédé selon l'une quelconque des revendications 1 ou 2, **caractérisé en ce que** le support (11) est réchauffé avant et/ou pendant le torsadage.

4. Procédé selon l'une quelconque des revendications 1 à 3, **caractérisé en ce qu'**une déformation en torsion permanente du support (11) induit une torsion de la structuration (12) d'un angle ≥ 30°, notamment dans la plage de 60° à 360°, notamment dans la plage de 60° à 120° et de façon préférée de 90° ± 20°.

5. Procédé selon l'une quelconque des revendications 1 à 4, **caractérisé en ce que** le support (11) est pourvu, dans la zone de la structuration (12), d'un enrobage (17) en forme de fourreau.

6. Procédé selon la revendication 5, **caractérisé en ce que** la structuration (12) comporte des lèvres (19) et/ou des doigts (14) saillant dans le plan radial qui sont formés au niveau de l'enrobage (15).

7. Procédé selon l'une quelconque des revendications 1 à 6, **caractérisé en ce que** la structuration comporte des soies (13) saillant dans le plan radial qui sont encastrées dans le support (11) et/ou dans l'enrobage (15).

8. Procédé selon la revendication 7, **caractérisé en ce que** les soies (13) sont positionnées dans un plan reposant, conjointement avec le support (11), dans un outil de moulage par injection, qu'elles sont injectées dans celui-ci par formation d'un enrobage (15) puis découpées à une longueur souhaitée.

9. Procédé selon la revendication 8, **caractérisé en ce que** les soies (13) sont injectées dans un plan reposant dans un outil de moulage par injection par formation du support (11) et qu'elles sont découpées à une longueur souhaitée lors d'une étape de procédé suivante.

10. Procédé selon l'une quelconque des revendications 1 à 9, **caractérisé en ce que** le support (11) est torsadé conjointement avec l'enrobage (15) et les soies (13) et/ou les doigts (14) et/ou les lèvres (19).
